(19) Europäisches Patentamt
European Patent Office
Office européen des brevets

(11) **EP 0 732 145 A1**

(12) **EUROPEAN PATENT APPLICATION**

(43) Date of publication:
18.09.1996 Bulletin 1996/38

(51) Int. Cl.<sup>6</sup>: **B01J 21/16**, B01D 53/86, B01D 53/94

(21) Application number: 96104255.3

(22) Date of filing: 18.03.1996

(84) Designated Contracting States:
DE FR GB

(30) Priority: 16.03.1995 JP 57598/95
13.07.1995 JP 177661/95

(71) Applicants:
• TOYOTA JIDOSHA KABUSHIKI KAISHA
Aichi-ken 471 (JP)
• KABUSHIKI KAISHA TOYOTA CHUO
KENKYUSHO
Aichi-gun Aichi-ken, 480-11 (JP)
• CATALER INDUSTRIAL CO., LTD.
Ogasa-gun, Shizuoka-ken (JP)

(72) Inventors:
• Yamashita, Kohichi
Toyota-shi, Aichi-ken (JP)
• Nagami, Tetsuo
Toyota-shi, Aichi-ken (JP)

• Sato, Akemi
Toyota-shi, Aichi-ken (JP)
• Banno, Kouji,
c/o K.K. Toyota Chuo Kenkyusho
Nagakute-cho, Aichi-gun, Aichi-ken (JP)
• Sugiura, Masahiro,
K.K. Toyota Chuo Kenkyusho
Nagakute-cho, Aichi-gun, Aichi-ken (JP)
• Watanabe, Yoshihide,
c/o KK Toyota Chuo Kenkyusho
Nagakute-cho, Aichi-gun, Aichi-ken (JP)
• Kumai, Yoko,
c/o K.K. Toyota Chuo Kenkyusho
Nagakute-cho, Aichi-gun, Aichi-ken (JP)
• Kasahara, Koichi,
c/o Cataler Industrial Co., Ltd.
Osaga-gun, Shizuoka-ken (JP)

(74) Representative: KUHNEN, WACKER & PARTNER
Alois-Steinecker-Strasse 22
85354 Freising (DE)

(54) **Oxidizing catalyst and process for producing the same**

(57)   A process for producing an oxidizing catalyst includes the steps of thermally treating a double-chained-structure type clay mineral including as a constituent Mg and/or Al in a temperature range of from 400 to 800 °C to modify the double-chained-structure type clay mineral to an amorphous clay mineral at least partially having an amorphous structure, substituting a transition metal element for at least a part of the constituent Mg and/or Al of the amorphous structure in a ratio of from 0.05 to 0.80 with respect to a total number of atoms of the constituent Mg and/or Al, and loading at least one of platinum-group elements on the substituted amorphous clay mineral. Note that, when the substituted amorphous clay mineral is subjected to an acidifying step followed by a salts removing step, it is unnecessary to precisely substitute the transition metal element for the constituent Mg and/or Al in the ratio. The resulting oxidizing catalyst can oxidize and decompose HC and CO included in exhaust gases even at low temperatures, and can inhibit the sulfates production even at high temperatures so as to reduce the emission of particulate floating materials. These advantageous effects maintain even after a durability test.

**Description**

BACKGROUND OF THE INVENTION

Field of the Invention

The present invention relates to an oxidizing catalyst which can oxidize hydrocarbons (HC), carbon monoxide (CO) and soluble organic fractions (hereinafter referred to as "SOF") to decompose them at low temperatures, and which can inhibit sulfur dioxide ($SO_2$) from turning into sulfuric acid at high temperatures so as to reduce the emission of particulate matters (hereinafter simply referred to a "PM"). HC, CO, "SOF" and $SO_2$ are, for instance, included in exhaust gases which are emitted from internal combustion engines (e.g., diesel engines). The present invention also relates to a process for producing such a oxidizing catalyst.

Description of Related Art

An oxidizing catalyst for oxidizing HC and CO included in exhaust gases usually comprises a porous support, and a platinum-group catalyst element loaded on the porous support. As for the porous support, inorganic porous supports are employed usually. For example, Japanese Unexamined Patent Publication (KOKAI) No. 62-201,648, discloses to use alumina, silica, titania, and alumina-silica as the inorganic porous support. Japanese Unexamined Patent Publication (KOKAI) No. 55-147,153 and Japanese Unexamined Patent Publication (KOKAI) No. 64-4,220 propose to employ type "A" zeolite, type "X" zeolite, mordenite-based zeolite, and crystalline zeolite as the inorganic porous support.

However, internal combustion engines have been improved in terms of performance recently, and accordingly emit exhaust gases which include may toxic harmful components, and whose temperature fluctuates greatly. As a result, the conventional oxidizing catalyst comprising the inorganic porous support and Pt loaded on the support cannot fully oxidize HC and CO included in such exhaust gases. Thus, an oxidizing catalyst with higher oxidizing activity has been longed for.

Japanese Unexamined Patent Publication (KOKAI) No. 4-363,138 discloses such an oxidizing catalyst. This oxidizing catalyst comprises a support including an amorphous clay mineral, and Pt and/or Pd loaded on the support. The amorphous clay mineral is turned into amorphous partially at least, and its constituent elements, such as Mg and/or Al, are replaced by a transition metal element in an amount of 10% by weight or less with respect to a total weight of the constituent Mg and/or Al.

As disclosed in Japanese Unexamined Patent Publication (KOKAI) No. 4-363,138, the oxidizing catalyst can be produced by the following order of steps; namely: a double-chained-structure type clay mineral (sepiolite, palygorskite, and attapulgite) is thermally treated at a temperature ranging from 400 to 800 °C, and thereby at least a part of the clay mineral structure is turned into a amorphous clay mineral. In the resulting amorphous clay mineral, the constituent elements, such as Mg, etc., are likely to be replaced by the other elements. Accordingly, a transition element, such a Fe, etc, is used to substitute for Mg, etc., thereby preparing a substituted amorphous clay mineral.

In the resulting substituted amorphous clay mineral, the transition element is dispersed nearly in a state of atoms, because the transition element substitutes for a part of Mg, etc, at least. Finally, Pt, etc, is loaded on the substituted amorphous clay mineral. In the resulting oxidizing catalyst, the loaded Pt or the like is loaded nearly in a state of atoms, because the substituted amorphous clay mineral has been turned into amorphous partially at least. The atomic dispersion of Pt or the like is caused by the increase of micro-fine crystalline boundary surfaces (or asymmetric surfaces) and the following increase of exposed OH groups in the structure.

Thus produced oxidizing catalyst can adsorb toxic substances, such as HC and CO at high adsorption. This advantage results from the arrangement that the substituted amorphous clay mineral has pores (hereinafter referred to as "channels") and exhibits a large BET specific surface area. The advantage also stems from the further arragement that the transition metal is nearly dispersed in a state of atoms to adsorb HC. Moreover, the oxidizing catalyst can effectively oxidize HC and CO at low temperatures. This extra advantage results from the furthermore arrangement that Pt, etc., is dispersed nearly in a state of atoms.

However, when the oxidizing catalyst disclosed in Japanese Unexamined Patent Publication (KOKAI) No. 4-363,138 is used to purify the exhaust gases emitted, for example, from diesel engines, it exhibits an inadequate HC oxidizing activity at low temperatures, and produces sulfates to adversely increase the emission of "PM" at high temperatures. In the oxidizing catalyst, $SO_2$ is adsorbed in a large amount on the substituted amorphous clay mineral whose constituent elements, such as Mg and/or Al, are replaced by a transition metal element in a amount of 10% by weight or less with respect to a total weight of the constituent Mg and/or Al, and the adsorbed $SO_2$ is oxidized by Pt, and turned into sulfuric acid at high temperatures. Thus, the emission of "PM" increases at high temperatures. In addition to gaseous HC, CO ad $SO_2$, the exhaust gases emitted from diesel engines include "PM" which are composed of "SOF", soot, and sulfates. In order to reduce the emission of "PM" by using catalysts, catalysts should decompose "SOF" and simultaneously suppress the production of sulfates resulting from the oxidation of $SO_2$.

Japanese Unexamined Patent Publication (KOKAI) No. 7-75,738 discloses an oxidizing catalyst which overcomes the problems. This oxidizing catalyst is produced by the following order of steps; namely: an amorphous clay mineral is prepared by a first heat treatment, amorphous clay mineral which is turned into amorphous partially at least; the constituent elements, such as Mg and/or Al, of the amorphous clay mineral are replaced by a transition metal element in an amount of 10% by weight or less with respect to a total weight of the constituent Mg and/or Al; and the resulting substituted amorphous clay mineral is subjected to a second heat treatment in a temperature range of from 500 to 900 °C.

In the substituted amorphous clay mineral, the unsubstituted constituent Mg and/or Al adsorb $SO_2$, and the adsorbed $SO_2$ is oxidized by Pt at high temperatures to produce sulfuric acid The sulfuric acid results in one of the causes of the aforementioned problems. Hence, in Japanese Unexamined Patent Publication (KOKAI) No. 7-75,738, the $SO_2$ adsorbing ability of the unsubstituted Mg and/or Al are decreased by the second heat treatment, and thereby the $SO_2$ adsorbing ability of the substituted amorphous clay mineral is degraded. Accordingly, the emission of sulfates can be reduced, and consequently the emission of "PM" can be minimized.

Degrading the $SO_2$ adsorbing ability of the substituted amorphous clay mineral (i.e., the support) is one of the measures for reducing the emissions of sulfates. However, it is impossible to fully inhibit the sulfates production by degrading the $SO_2$ adsorbing ability of the support. Therefore, a further improvement has been longed for inhibiting the sulfates production.

In addition, when the oxidizing catalysts, including the substituted amorphous clay mineral whose Mg and/or Al are partially replaced by a transition metal element as disclosed in Japanese Unexamined Patent Publication (KOKAI) Nos. 4-363,138 and 7-75,738, are subjected to a durability test, the oxidizing catalyst was found to exhibit the same HC and CO conversions as their initial conversions (i.e., the HC and CO conversions before it is subjected to the durability test), but to exhibit a degraded "PM" conversion lower than that of the initial conversion. Note that, in the durability test, the oxidizing catalyst was exposed to exhaust gases which were emitted from a diesel engine in a temperature range of from about 250 to 600 °C.

According to the studies on the causes of the drawback the constituent elements, such as Mg and/or Al, being free from the transition-metal-element substitution and residing in the substituted amorphous clay mineral, react with $SO_2$, contained in the exhaust gases, to produce sulfates like magnesium sulfate ($MgSO_4$). The sulfates close the channels in the substituted amorphous clay mineral. As a result, the substituted amorphous clay mineral has a BET specific surface area of 20 $m^2$/g, which is about 1/10 of its initial BET specific surface area, after the durability test. Thus, after the durability test, the adsorbing ability, stemming from the substituted amorphous clay mineral and the transition metal element, of adsorbing the "PM" components, such as "SOF" was found to be degraded, and the "PM" components were found to be adsorbed and decomposed less.

## SUMMARY OF THE INVENTION

The present invention has been developed in view of the circumstances described above. It is therefore one of the objects of the present invention to provide a precess for producing an oxidizing catalyst. The resulting oxidizing catalyst can oxidize and decompose HC and CO included in exhaust gases even at low temperatures, can inhibit the sulfates production even at high temperatures so as to reduce the emission of "PM", and can keep the "PM" purification from deteriorating even after it is subjected to a durability test.

A first aspect of the present invention can carry out the aforementioned object. According to the first aspect of the present invention, a process for producing an oxidizing catalyst comprises the steps of:

thermally treating a double-chained-structure type clay mineral including as a constituent at least one element selected from the group consisting of magnesium and aluminum in a temperature range of from 400 to 800 °C to modify the double-chained-structure type clay mineral to a amorphous clay mineral at least partially having an amorphous structure;

substituting a transition metal element for the constituent of the amorphous structure in a ratio of from 0.05 to 0.80 with respect to a total number of atoms of the constituent of the amorphous clay mineral for preparing a substituted amorphous clay mineral; and

loading at least one element selected from the group consisting of platinum-group elements on the substituted amorphous clay mineral.

An oxidizing catalyst produced by the first aspect of the present invention comprises:

an amorphous clay mineral having at least one part of amorphous structure in a double-chained-structure type clay mineral including as a constituent at least one element selected from the group consisting of magnesium and aluminum; and

a platinum-group element loaded on the amorphous clay mineral,

the constituent of the at least one part of amorphous structure being at least partially replaced with a transition metal element in a ratio of from 0.05 to 0.80 with respect to a total number of atoms of the constituent of the amorphous clay mineral.

It is preferred that the amorphous clay mineral is further provided with an amorphous transition-metal-element oxide on the surface.

A second aspect of the present invention can also carry out the aforementioned object. According to the second aspect of the present invention, a process for producing an oxidizing catalyst, comprising the steps of:

thermally treating a double-chained-structure type clay mineral including as a constituent at least one element selected from the group consisting of magnesium and aluminum in a temperature range of from 400 to 800 °C to modify the double-chained-structure type clay mineral to an amorphous clay mineral at least partially having a amorphous structure;

substituting a transition metal element at least partially for the constituent of the amorphous structure for preparing a substituted amorphous clay mineral; and

acidifying the substituted amorphous clay mineral to turn at least a part of a remaining constituent from substitution into a salt for preparing a acidified clay mineral;

removing the salt from the acidified clay mineral for preparing a salt-removed clay mineral; and

loading at least one element selected from the group consisting of platinum-group elements on the salt-removed clay mineral.

It is preferred that, in the substituting step, the transition metal element substitutes for at least a part of the constituent magnesium and aluminum in a ratio of from 0.05 to 0.80 with respect to a total number of atoms of the constituent magnesium and aluminum.

As for the double-chained-structure type clay mineral including Mg and/or Al, it is possible to exemplify sepiolite, palygorskite, and attapulgite whose theoretical chemical formulas are as follows; namely:

$$\text{sepiolite: } Si_{12}Mg_8O_{30}(OH)_4 \cdot (OH_2)_4 \cdot 8H_2O; \text{ and}$$

$$\text{palygorskite, and attapulgite: } (Mg, Al)_5Si_8O_{20}(OH)_2 \cdot (OH_2)_4 \cdot 4H_2O.$$

Note that the double-chained-structure type clay mineral can include the other elements as its constituent elements.

The double-chained-structure type clay mineral is an assembly of thread-like micro-fine crystals. The thread-like micro-fine crystals have a diameter of from 0.05 to 0.6 $\mu$m, and include highly reactive hydroxide groups on their surfaces. The thread-like micro-fine crystals form a plurality of channels among themselves. The channels have a cross-sectional width of from 0.6 to 1 nm approximately, have a nearly rectangular cross-section, and extend parallelly along the extending direction of the thread-like micro-fine crystals. Thus, the double-chained-structure type clay mineral exhibits a large BET specific surface area of from 350 to 400 $m^2$/g initially.

Note that, in the present invention, the double-chained-structure type clay mineral is not a single large independent crystal, but an assembly of fine crystals. Accordingly, the double-chained-structure type clay mineral includes asymmetric surface where its crystalline structure breaks. Hydroxide group are present on the asymmetric surfaces, and are apt to adsorb metallic complexes like platinum compounds. The amorphous structure is a state in which an original crystalline structure collapses, and accordingly includes an increasing number of asymmetric surfaces. As a result, hydroxide groups exist on the asymmetric surfaces in an increasing number, and are spread widely in the entire amorphous clay mineral. Thus, the platinum-group elements, loaded by way of the hydroxide groups, are put into such a highly dispersed state that they are less likely to agglomerate. Also note that amorphous clay mineral has a high BET specific surface area (e.g., 120 $m^2$/g or more). Consequently, amorphous clay mineral is superb in terms of gas- and liquid-adsorbing ability. Hence, the present oxidizing catalyst exhibits a high oxidizing activity.

In the present invention, there are two approaches employed for inhibiting the sulfate generation. The double-chained-structure type clay mineral adsorbs $SO_2$ at its constituent Mg or Al. The platinum-group elements, loaded adjacent to the constituent Mg or Al, oxidize the adsorbed $SO_2$ to produce sulfates. Therefore, the first approach is to reduce the amount of $SO_2$ adsorbed at the Mg or Al which is a constituent element of the double-chained-structure type clay mineral as a catalyst support.

The second one is the way how inevitable production of $SO_3$ from $SO_2$ on the platinum-group elements is again reduced to $SO_2$.

It is one of the major features of the present invention that the substituted amorphous clay mineral, constituting the support of the present oxidizing catalyst, employed in the above-described two approaches. For conducting these approaches, the present invention has a structure that, in the substituted amorphous clay mineral, the transition metal element substitutes for at least a part of the constituent Mg and/or Al in a ratio of from 0.05 to 0.80 with respect to a total number of atoms of the constituent Mg and/or Al.

Specifically, in the present oxidizing catalyst, the number of atoms of the constituent Mg and/or Al is reduced in the substituted amorphous clay mineral because the transition metal element substitutes for the constituent Mg and/or Al in a large amount. As a result, the present oxidizing catalyst less adsorbs $SO_2$.

Further, it is believed that $SO_2$, included in exhaust gases, reacts with oxygen, and is activated on the platinum-group elements, to produce $SO_3$, and then the resulting $SO_3$ is reduced back to $SO_2$ on the transition metal atoms which are present in a large amount. Thus, there arises the spillover effect between the loaded platinum-group element and the substituent transition metal element. As a result, the present oxidizing catalyst inhibits the sulfate generation.

Furthermore, the transition metal element also works as a HC decomposing co-catalyst. As a result, the present oxidizing catalyst has a good HC-oxidizing and decomposing activity at low temperatures.

According to the present process for producing the present oxidizing catalyst, when the amorphous clay mineral includes either one of Mg and Al as a constituent element, the transition metal element substitutes for the constituent element in a ratio of from 0.05 to 0.80 with respect to a total number of atoms of the constituent element.

Moreover, according to the present process for producing the present oxidizing catalyst, when the amorphous clay mineral includes both of Mg and Al as the constituent elements, the transition metal element substitutes for both Mg and Al in a ratio of from 0.05 to 0.80 with respect to a total number of atoms of Mg and Al.

When the transition element substitutes for Mg and/or Al in a ratio of less than 0.05 with respect to a total number of atoms of Mg and/or Al, the substituted amorphous clay mineral includes too much Mg and/or Al to inhibit $SO_2$ from adsorbing thereon. The thus adsorbed $SO_2$ converts, for example, Mg, into sulfates. The resulting sulfates elute out of the substituted amorphous clay mineral to change the support structures, thereby degrading the catalytic activities of the resulting oxidizing catalyst. It is preferred that the transition metal element substitutes for Mg and/or Al in a greater ratio. However, when the transition element substitutes for Mg and/or Al in a ratio of more than 0.80 with respect to a total number of atoms of Mg and/or Al, a crystalline single oxide, including the transition metal element, is likely to arise, and apt to grow coarsely. The resulting single oxide reacts with $SO_2$ to adversely affect the catalytic activities of the resulting oxidizing catalyst. When a transition metal element is present as a crystalline single oxide, the advantages stemming from the present invention are little effected.

If the transition element substitutes for Mg and/or Al in a ratio of more than 0.80, or in a ratio of 1.0 with respect to a total number of atoms of Mg and/or Al; namely: if the transition element substitutes for all of Mg and/or Al, the substituted amorphous clay mineral loses its structure, and cannot perform the present advantageous effects. From the foregoing discussion, it is especially preferred that the transition elements substitutes for Mg and/or Al in a ratio of from 0.10 to 0.70 with respect to a total number of atoms of Mg and/or Al.

In addition, it is preferred that the substituted amorphous clay mineral is provided with an amorphous transition metal oxide on the surface. This oxide is difficult to be changed to crystalline, because the amorphous transition metal oxide formed on the surface of the substituted amorphous clay mineral bonds ionically with functional groups existing on the surface thereof. Thus, the oxide scarcely reads with $SO_2$ included in exhaust gases, and hardly produces the sulfates, contrary to the crystalline single oxide. Specifically, the amorphous transition metal oxide formed on the surface of the substituted amorphous clay mineral performs in the same manner with the substituted amorphous clay mineral. Accordingly, the structure can reliably inhibit the sulfate generation.

All in all, the present oxidizing catalyst has a superb oxidizing activity at low temperatures, can keep the sulfate generation, and can reduce the emission of "PM".

The present invention described so far has been developed in order to reduce the amount of the sulfates produced on catalysts. Note that the present oxidizing catalyst is effective to actively purify "SOF", included in exhaust gases, in order to reduce the emission of "PM", because it can exhibit high HC and CO conversions at low temperatures.

According to the second aspect of the present invention (i.e., another process for producing the present oxidizing catalyst), the resulting present oxidizing catalyst can also purify "SOF" actively so as to reduce the emission of "PM". The another production process operates as follows. In the acidifying step, the substituted amorphous clay mineral is acidified. Accordingly, at least a part of Mg and/or Al, which have not been replaced by the transition metal element and reside adjacent to the substituent transition metal element in the substituted amorphous clay mineral, are turned into the salts. The acidified clay mineral is thus prepared. By the way, when exhaust gases have a high temperature, $SO_2$ cannot be completely inhibited from oxidizing and producing the sulfates. Accordingly, a part of $SO_2$ is turned into the sulfates to close the channels in the double-chained-structure type clay mineral. As a result, the double-chained-structure type clay mineral adsorbs "SOF" less, and exhibits a degraded "SOF" purifying capability.

Hence, in the acidifying step, the residing Mg and/or Al have been converted into their sulfates in advance. Thereafter, in the salt-removing step, the salts are removed from the acidified clay mineral to prepare the salt-removed clay mineral. The salt-removing step thus removes Mg and/or Al prior to the subsequent steps or operations. Consequently, the resulting present oxidizing catalyst less includes Mg and/or Al, which have not been replaced by the transition metal element and reside in the substituted amorphous clay mineral; namely: the resulting present oxidizing catalyst includes the constituent elements in a reduced amount, constituent elements which react with $SO_2$, contained in exhaust gases, to produce salts in a durability test Thus, in the resulting present oxidizing catalyst, the salts hardly arise to clog the channels in the resulting salt-removed clay mineral even her a durability test. As a result, the salt-removed clay mineral can keep its initial high BET specific surface area, and thereby the resulting present oxidizing catalyst can purify "SOF" initially as well as after a durability test and control the emission of "PM".

In accordance with the second aspect of the present invention, it is possible to produce the present oxidizing catalyst which can purify "SOF" at high conversion even after a durability test.

As having been described so far, an aspect of the present invention enables to produce a high-quality oxidizing catalyst. For instance, the resulting oxidizing catalyst can purify "PM" at high conversion even after it is subjected to a durability test.

DETAILED DESCRIPTION OF THE PREFERRED EMBODIMENTS

Having generally described the present invention, a further understanding can be obtained by reference to the specific preferred embodiments which are provided herein for the purpose of illustration only and not intended to limit the scope of the appended claims.

A heat treatment can turn at least a part of the double-chained-structure type clay mineral into amorphous. A heat treatment changes the structures of the double-chained-structure type clay mineral from a crystalline structure to a amorphous structure. If the heat treatment is carried out at a temperature higher than a predetermined temperature, the double-chained-structure type clay mineral comes to have a completely different crystalline structure. Thus, it is preferable to carry out the heat treatment in a temperature range of from 400 to 800 °C. When the heat treatment is carried out at a temperature of less than 350 °C, the double-chained-structure type clay mineral loses its crystallization water, and turns into amorphous. However, the resulting amorphous clay mineral is liable to absorb water, and accordingly easily restores the original crystalline structure. When the heat treatment is carried out at a temperature of more than 800 °C, the double-chained-structure type clay mineral unpreferably produces enstatite ($MgSiO_3$) crystals which sharply degrade the replaceability of the constituent Mg and/or Al by the transistion metal element. Hence, it is further preferable to carry out the heat treatment in a temperature range of from 600 to 700 °C which enables the double-chained-structure type clay mineral to turn into amorphous to a greater extent, and which makes Mg and/or Al more likely to be subjected to ion-exchange with the transition metal element.

It is preferable to employ an ion-exchanging process in order to replace Mg and/or Al of the amorphous clay mineral, which has been turned into amorphous partially at least, by the transition metal element. In the amorphous clay mineral, the bonding forces of the Mg-O bonds and/or Al-O bonds are deteriorated by the varied crystalline structure. Consequently, the constituent elements of the amorphous clay mineral, such a Mg and/or Al, are likely to be subjected to ion-exchange with the transition metal element.

When carrying out the ion-exchange process, the amorphous clay mineral is first dispersed in water to prepare a suspension. It is preferable to prepare water in an amount of 10 times by weight or more with respect to a weight of the amorphous clay mineral and to disperse the amorphous clay mineral in such amount of water. When water is prepared in an amount of less than 10 times by weight with respect to a weight of the amorphous clay mineral, the resulting suspension is unstable, and the ion-exchange occurs locally. In addition, it is preferable to introduce salts of the substituent transition metal element into the suspension so as to cause the ion-exchange with ease.

The transition metal element introduced by the ion-exchange process exists present among the thread-like micro-fine crystals which appropriately diffuse or adsorb HC and CO, or in the channels. Note that the term "channels" means tunnels which are formed among the thread-like micro-fine crystals, have a cross-sectional width of from 0.6 to 1 nm approximately, and extend along the thread-like micro-fine crystals. Thus, the transition metal element can be present in a highly dispersed manner without collapsing the channel-like structure.

When carrying out the ion-exchange process, it is preferable to avoid involving oxygen, contained in air, into the suspension as much a possible. When oxygen is involved into the suspension in the ion-exchange process, the transition metal element is not subjected to the ion-exchange, and turned into single transition metal oxides. Accordingly, the resulting oxidizing catalyst cannot inhibit the sulfate generation. Moreover, the single transition metal oxides enclose or collapse the spaces among the thread-like micro-fine crystals, or the channels to adversely affect the diffusion or adsorption of HC and CO. Note that, after the ion-exchange process is completed, oxygen, included in air, may be involved into the suspension, because such oxygen involvement hardly affects the ion-exchange process.

In addition, after stabilizing the amorphous clay mineral by the ion-exchange process, a extra transition metal element can be adsorbed on the surface of the substituted amorphous clay mineral in order to form an amorphous transition metal oxide on the surface of the substituted amorphous clay mineral.

As for the transition metal element, it is preferable to exemplify Fe, Co, Ni, Mn, and Cu. Among them, Fe exhibits a remarkably high catalytic activity. Note that the transition metal elements other than Fe can be employed without any inconvenience, because they likewise effect advantages of the present invention. However, it is unpreferable to use vanadium (V) as the transition metal element, because V is less likely to undergo the ion-exchange, precipitates crystals of single oxides, and dissipates in air when the resulting oxidizing catalyst is in service.

As the platinum-group element, it is possible to employ at least one element selected from the group consisting of platinum (Pt), palladium (Pd), rhodium (Rh), ruthenium (Ru), osmium (Os), and iridium (Ir). The loading amount of the platinum-group element depends on the specific platinum-group elements. For example, Pt is preferably loaded on the support (i.e., the substituted amorphous clay mineral, or the salt-removed clay mineral) in an amount of from 0.1 to 10% by weight with respect to a weight of the support. When Pt is loaded on the support in an amount of less than 0.1% by weight with respect to a weight of the support, the resulting oxidizing catalyst little exhibits catalytic activity. When Pt is loaded on the support in an amount of more than 10% by weight with respect to a weight of the support, Pt exhibits saturated catalytic activity. In addition, the resulting oxidizing catalyst shows deteriorated catalytic action because Pt clusters coarsely thereon, and such a loading amount of Pt pushes up the manufacturing costs.

In the acidifying step, the substituted amorphous clay mineral can be treated by using sulfuric acid, hydrochloric acid, nitric acid, or acetic acid. It is especially preferable to treat the substituted amorphous clay mineral by using sulfuric acid. The term, "treated by using sulfuric acid", herein means that the substituted amorphous clay mineral is, for example, subjected to a sulfur dioxide ($SO_2$) gas, or to an ammonium sulfate (($NH_4)_2SO_4$) solution followed by calcination. Note that it is necessary to carry out the acidifying step after the substituting step. When the acidifying step is carried out prior to the substituting step, protons substitute for Mg and/or Al in the acidifying step, and accordingly the transition metal element can hardly substitute for Mg and/or Al.

In the salt removing step, the salts can be removed from the acidified clay mineral by using water, or alcohol.

The oxidizing catalyst produced by the present production processes can comprise a catalyst loading layer including the substituted amorphous clay mineral or the salt-removed clay mineral, and the platinum-group element loaded on the catalyst loading layer. The loading step of platinum-group element may be carried out before or after the acidifying step. However, a loading step after the acidifying step is preferable in respect of stabilization of catalytic activity. The oxidizing catalyst can be formed as a pellet, or it can be formed integrally with a support substrate. The support substrate can be, for example, a diesel particulate filter (or DPF) made from cordierite, a straight-flow type honeycomb body made therefrom, pellets made therefrom, or a honeycomb body made from metal. The present oxidizing catalyst can be embodied as a trapping exhaust gas purifying apparatus, or an opening exhaust gas purifying apparatus.

First through Fifth Preferred Embodiments

A sepiolite powder having a grain size of 100 mesh or less was put in a crucible made from alumina The sepiolite was produced in Turkey. The crucible was placed in a electric furnace to thermally treat the sepiolite powder at 650 °C for 4.5 hours. An amorphous sepiolite powder was thus prepared.

The amorphous sepiolite powder was weighed out by 30 grams, and was mixed with a ion-exchanged water by a home-use mixer for 10 minutes to disperse therein. Then, iron (II) chloride was added to the resulting dispersion in a predetermined amount. Note that the additions of iron (II) chloride resulted in the ratios set forth in Table 2 below; namely: the ratios of the number of Fe atoms with respect to the total number of Mg atoms included in the amorphous sepiolite powder. After iron (II) chloride was added, the dispersion was further mixed to disperse $Fe^{2+}$. The dispersion was further stirred by a disper at a slow revolving speed for another 30 minutes while taking precautions against the air involvement. Thus, Fe atoms substituted for Mg atoms included in the amorphous sepiolite powder. After completing the substitution reaction, the dispersion was repeatedly suction-filtered to completely wash out the chloride ions, etc. Finally, the resulting filtered substance was dried at 110 °C, thereby preparing an Fe-substituted amorphous sepiolite powder.

The thus prepared Fe-substituted amorphous sepiolite was weighed out by 100 grams, and immersed in a dinitrodiammine platinum nitrate aqueous solution which included Pt in an amount of 2% by weight. The mixture was stirred and heated on a heating stirrer in a temperature range of from 120 to 150 °C, thereby evaporating the excessive water content. The resulting residual substance was dried at 110 °C in a drier for 15 hours, thereby completely evaporating the water content. Finally, the resulting completely-dried substance was calcinated at 350 °C by an electric furnace in air for 3 hours. Oxidizing catalysts of the First through Fifth Preferred Embodiments were thus prepared.

Examination and Evaluation

The oxidizing catalysts of the First through Fifth Preferred Embodiments were evaluated by the following examinations. The oxidizing catalysts were pressed by a pressure of 150 kgf/cm², and were thereafter pulverized by using a knife. The pulverized oxidizing catalysts were classified into fractions having a grain size of from 6 to 10 mesh. The thus pulverized-and-classified oxidizing catalysts were measured out by 7 c.c., and were charged in a quarts tube, respectively. The quarts tubes charged with the oxidizing catalysts were placed in a fixed-bed gas-fluidization apparatus. Then, the quarts tube were exposed to a model gas having a composition as recited in Table 1 below. The oxidizing catalysts were examined for the temperature at which they converted 50% HC, and for the sulfates conversion at 450 °C. Moreover, the oxidizing catalysts were subjected to a X-ray diffraction analysis in order to examine for the presence of the single oxides of Fe. The results of these examinations are also summarized in Table 2. Note that the sulfates conversion was calculated by the following equation; namely:

$$(Sulfates\ Conversion) = [\{(SO_2\ Gas\ Concentration\ at\ Inlet) -$$

$$(SO_2\ Gas\ Concentration\ at\ Outlet)\}/(SO_2\ Gas\ Concentration\ at\ Inlet)] \times 100$$

TABLE 1

| Gas Component | HC (ppmC) | CO (ppm) | $CO_2$ (%) | $O_2$ (%) | NO (ppm) | $SO_2$ (ppm) | $H_2O$ (%) | $N_2$ |
|---|---|---|---|---|---|---|---|---|
| Content | 600 | 1,000 | 5 | 10 | 300 | 50 | 10 | Balance |

Sixth through Eighth Preferred Embodiments

The Fe-substituted amorphous sepiolite powder was prepared in the same manner as the First through Fifth Preferred Embodiments, and was further added to an iron (II) chloride solution. Accordingly, $Fe^{2+}$ reacted with the surface of the Fe-substituted amorphous sepiolite powder. Then, the Fe-substituted amorphous sepiolite powder was dried to form the amorphous oxides of Fe on the surface.

Thereafter, the procedures of the First through Fifth Preferred Embodiments were followed to complete the preparation of the oxidizing catalysts of the Sixth through Eighth Preferred Embodiments. The resulting oxidizing catalysts were examined for the 50%-HC conversion temperature and the sulfates conversion in the same manner as the First through Fifth Preferred Embodiments. The results of the examinations are also summarized in Table 2.

Comparative Example Nos. 1 through 5

Except that the amounts of Fe substituents (i.e., the ratios of the number of substituent Fe atoms with respect to the total number of Mg atoms included in the amorphous sepiolite powder) were varied to be less than 0.05, or more than 0.80 as set forth in Table 2, oxidizing catalysts of Comparative Example Nos. 1 thorough 5 were prepared in the same manner as the First through Fifth Preferred Embodiments. The resulting oxidizing catalysts were examined for the 50%-HC conversion temperature and the sulfates conversion in the same manner as the First through Fifth Preferred Embodiments. The results of the examination are also summarized in Table 2.

Comparative Example No. 6

Except that the amount of Fe substituents (i.e., the ratio of the number of substituent Fe atoms with respect to the total number of Mg atoms included in the amorphous sepiolite powder) was fixed to 0.10, and that air was blown into the suspension in the ion-exchange process, an oxidizing catalyst of Comparative Example No. 6 was prepared in the same manner as the First through Fifth Preferred Embodiments. As a result, $Fe^{2+}$ scarcely underwent the ion-exchange at all, little turned into amorphous, and precipitated the crystalline oxides of Fe.

Thereafter, the procedures of the First through Fifth Preferred Embodiments were allowed to prepare an oxidizing catalyst of Comparative Example No. 6. The resulting oxidizing catalyst was examined for the 50%-HC conversion temperature and the sulfates conversion in the same manner as the First through Fifth Preferred Embodiments. The results of the examinations are also summarized in Table 2.

TABLE 2

| Identification | Amount of Fe Substituents (Atom-Number Ratio) | Temp. at 50%-HC Conversion (°C) | Sulfates Conversion (%) | Presence of Crystalline Single Oxide of Fe |
|---|---|---|---|---|
| 1st Pref. Embodiment | 0.06 | 270 | 41 | None |
| 2nd Pref. Embodiment | 0.16 | 265 | 38 | None |
| 3rd Pref. Embodiment | 0.35 | 258 | 28 | None |
| 4th Pref. Embodiment | 0.76 | 266 | 45 | None |
| 5th Pref. Embodiment | 0.80 | 271 | 44 | None |
| 6th Pref. Embodiment | 0.11 | 263 | 40 | None |
| 7th Pref. Embodiment | 0.24 | 260 | 30 | None |
| 8th Pref. Embodiment | 0.37 | 260 | 28 | None |
| Comp. Ex. 1 | 0.04 | 288 | 60 | None |
| Comp. Ex. 2 | 0.02 | 290 | 64 | None |
| Comp. Ex. 3 | 0.86 | 275 | 58 | None |
| Comp. Ex. 4 | 0.99 | 280 | 61 | None |
| Comp. Ex. 5 | 0 | 290 | 65 | None |
| Comp. Ex. 6 | 0.10 | 272 | 63 | Present |

It is understood from Table 2 that the oxidizing catalysts of the First through Eighth Preferred Embodiments exhibited a lower temperature at 50%-HC conversion and a lower sulfates conversion than those exhibited by the oxidizing catalysts of Comparative Example Nos. 1 through 6. These advantages apparently resulted from the arrangement that the amount of Fe substituents (i.e., the ratio of the number of substituent Fe atoms with respect to the total number of Mg atoms included in the amorphous sepiolite powder) was controlled in a range of from 0.05 to 0.80.

In particular, in the oxidizing catalyst of Comparative Example No. 6, the amount of Fe substituents fell in the above-described range. However, when preparing the oxidizing catalyst, air was involved into the suspension in such a large amount that there arose the single crystalline oxides of Fe. As a result, it is believed that the oxidizing catalyst exhibited an enlarged sulfates conversion.

Ninth through Twentieth Preferred Embodiments

Except that, instead of Fe, either one of Ni, Co and Mn was employed as the transition metal element as recited in Table 3 below, and that the amounts of transition-metal-element substituents (i.e., the ratios of the number of substituent transition-metal-element atoms with respect to the total number of Mg atoms included in the amorphous sepiolite powder) were diversified in the range of from 0.05 to 0.80 as set forth in Table 3, oxidizing catalysts of the Ninth through Twentieth Preferred Embodiments were prepared in the same manner as the First through Fifth Preferred Embodiments. The resulting oxidizing catalysts were examined for the 50%-HC conversion temperature and the sulfates conversion in the same manner as the First through Fifth Preferred Embodiments. The results of the examinations are also summarized in Table 3.

Comparative Example Nos. 7 through 11

Except that, instead of Fe, either one of Ni, Co and Mn was employed as the transition metal element as recited in Table 3, and that the amounts of transition-metal-element substituents (i.e., the ratios of the number of substituent transition-metal-element atoms with respect to the total number of Mg atoms included in the amorphous sepiolite powder) were varied to be less than 0.05, or more than 0.80 as set forth in Table 3, oxidizing catalysts of Comparative Example Nos. 7 through 11 were prepared in the same manner as the First through Fifth Preferred Embodiments. The resulting oxidizing catalysts were examined for the 50%-HC conversion temperature and the sulfates conversion in the same manner as the First through Fifth Preferred Embodiments. The results of the examinations are also summarized in Table 3.

TABLE 3

| Identification | Spices of Transition Metal Element | Amount of Transition-Metal-Element Substituents (Atom-Number Ratio) | Temp. at 50%-HC Conversion (°C) | Sulfates Conversion (%) |
|---|---|---|---|---|
| 9th Pref. Embodiment | Ni | 0.37 | 270 | 41 |
| 10th Pref. Embodiment | Ni | 0.16 | 268 | 46 |
| 11th Pref. Embodiment | Ni | 0.75 | 273 | 47 |
| 12th Pref. Embodiment | Ni | 0.07 | 271 | 53 |
| 13th Pref. Embodiment | Co | 0.10 | 275 | 48 |
| 14th Pref. Embodiment | Co | 0.41 | 268 | 40 |
| 15th Pref. Embodiment | Co | 0.61 | 270 | 57 |
| 16th Pref. Embodiment | Co | 0.77 | 281 | 60 |
| 17th Pref. Embodiment | Mn | 0.05 | 278 | 46 |
| 18th Pref. Embodiment | Mn | 0.41 | 271 | 38 |
| 19th Pref. Embodiment | Mn | 0.69 | 280 | 55 |
| 20th Pref. Embodiment | Mn | 0.80 | 280 | 60 |
| Comp. Ex. 7 | Ni | 0.01 | 290 | 66 |
| Comp. Ex. 8 | Ni | 0.86 | 298 | 69 |
| Comp. Ex. 9 | Co | 0.04 | 291 | 76 |
| Comp. Ex. 10 | Co | 0.91 | 293 | 73 |
| Comp. Ex. 11 | Mn | 0.03 | 288 | 68 |

It is understood from Table 3 that the oxidizing catalysts of the Ninth through Twentieth Preferred Embodiments exhibited a lower temperature at 50%-HC conversion and a lower sulfates conversion than those exhibited by the oxidizing catalysts of Comparative Example Nos. 7 through 11. These advantages apparently resulted from the arrangement that the amount of transition-metal-element substituents (i.e., the ratio of the number of substituent Ni, Co or Ma atoms with respect to the total number of Mg atoms included in the amorphous sepiolite powder) was controlled in a range of from 0.05 to 0.80.

When the results summarized in Table 2 are compared with those summarized in Table 3, it is appreciated that the substituent Fe atoms reduced the sulfates conversion most effectively among the substituent transition-metal-element atoms.

Twenty-first Preferred Embodiment

(Heat Treatment Step)

As for the double-chained-structure type clay mineral, a sepiolite powder was prepared in a grain size of 100 mesh. The sepiolite was produced in Turkey. The sepiolite powder was put in a crucible made from alumina. The crucible was placed in an electric furnace to thermally treat the sepiolite powder at 650 °C for 3 hours. An amorphous sepiolite powder was thus prepared.

(Substitution Step)

The amorphous sepiolite powder was weighed out by 2 kg. 60 L pure water was added to the amorphous sepiolite powder. The resulting mixture, was stirred by a mixer to prepare a suspension "A". While, a solution "B" was prepared; namely: 10 L pure water was added to 1.2 kg iron (II) chloride ($FeCl_2$), and the resulting mixture was stirred by a mixer.

The solution "B" was added to the suspension "A". The resulting mixture was stirred by a propeller stirrer for 1 hour, and suction-filtered. The process was further stirred by a propeller stirrer while taking precautions against the air involvement. Then, the resulting cake was washed with pure water three times. Thereafter, the washed cake was dried at 120 °C for 24 hours. Finally, the dried cake was calcinated at 500 °C for 1 hour. By carrying out these operations, the amorphous sepiolite powder was subjected to ion exchange so that Fe substituted for Mg therein. A substituted sepiolite powder was thus prepared. According to a composition analysis, the substituted sepiolite powder had an Fe content of 5.5% by weight.

(Acidifying Step)

The substituted sepiolite powder was put in a boat made from alumina. The boat was placed in a cylinder-shaped electric furnace. Then, the substituted sepiolite powder was exposed to an $SO_2$ gas at 500 °C for 15 hours, and thereby Mg, being present in the substituted sepiolite powder, was turned into $MgSO_4$. A sulfuric-acid-acidified amorphous sepiolite powder was thus prepared. Note that the $SO_2$ gas included $SO_2$ in an amount of 100 ppm, $O_2$ in an amount of 10%, $H_2O$ in an amount of 2.3%, and the balance of $N_2$.

(Salt Removing Step)

The sulfuric-acid-acidified amorphous sepiolite powder was weighed out by 2 kg. 40 L pure water was added to the sulfuric-acid-acidified amorphous sepiolite power. The resulting mixture was stirred by a mixer for 2 hours, and suction-filtered. Then, the resulting cake was washed with pure water, and dried at 120 °C. Accordingly, $MgSO_4$ was removed from the sulfuric-acid-acidified amorphous sepiolite powder. A sulfate-removed amorphous sepiolite powder was thus prepared. According to a quantitative analysis, $MgSO_4$ was removed from the sulfuric-acid-acidified amorphous sepiolite powder in an amount of 11% by weight.

(Loading Step)

The sulfate-removed sepiolite powder was weighed out by 100 parts by weight, and mixed with 10 parts by weight of a silica sol and 225 parts by weight of distilled water. The resulting mixture was milled fully, thereby preparing a slurry for coating. Then, a commercially available support substrate was immersed into the slurry, and taken out of the slurry. Further, the support substrate was blown to blow away the slurry in excess. Furthermore, the support substrate was dried at 120 °C for 2 hours, and calcinated at 600 °C for 2 hours. Thus, a catalyst loading layer, including the sulfate-removed amorphous sepiolite powder, was prepared, and was formed on the support substrate in an amount of 100 g with respect to 1 L volume of the support substrate. The support substrate was a straight-flow type honeycomb body made from cordierite, had a cylindrical shape, and its volume was 1.3 L.

Finally, a dinitrodiammine platinum nitrate solution was absorbed into the support substrate with the catalyst loading layer coated thereon. The absorbed support substrate was calcinated at 250 °C for 2 hours to load Pt on the sulfate-removed amorphous sepiolite powder. An oxidizing catalyst (hereinafter referred to as "Example No. 21) was thus prepared by a Twenty-first Preferred Embodiment according to the present invention. In Example No. 21, Pt was loaded in an amount of about 1.5 g with respect to 1 L volume of the support substrate. Table 4 below summarizes the major composition of the catalyst loading layer, the substituent transition element, the content of the substituent transition element, and the amount of the removed sulfate in Example No. 21.

TABLE 4

| Identification | Catalyst Supporting Layer | Substituent Transition Element Content (% by wt.) | | Removed Sulfate Amount (% by wt.) |
|---|---|---|---|---|
| Ex. No. 21 | Amorphous Sepiolite | Fe | 5.5 | 11 |
| Ex. No. 22 | Amorphous Sepiolite | Fe | 5.5 | 19 |
| Ex. No. 23 | Amorphous Palygorskite | Co | 4.9 | 10 |
| Comp. Ex. No. 12 | Amorphous Sepiolite | Fe | 5.5 | 0 |
| Comp. Ex. No. 13 | Amorphous Palygorskite | Co | 4.9 | 0 |

Twenty-second Preferred Embodiment

Except that the acidifying step was carried out differently from that of the Twenty-first Preferred Embodiment, a Twenty-second Preferred Embodiment of the present invention was carried out in the same manner as the Twenty-first Preferred Embodiment.

In the acidifying step, for instance, the same substituted amorphous sepiolite powder as prepared in the Twenty-first Preferred Embodiment was weighed out by 2 kg. 1.3 kg ammonium sulfate ($(NH_4)_2SO_4$) and 10 L pure water were added to the substituted amorphous sepiolite powder. The resulting mixture was stirred, and thereafter dried at 120 °C for 24 hours. Finally, the thus dried substance was calcinated in air at 500 °C for 2 hours. In the Twenty-second Preferred Embodiment, a sulfuric-acid-acidified amorphous sepiolite powder was prepared in the above-described manner.

The resulting sulfuric-acid-acidified amorphous sepiolite powder was processed into a oxidizing catalyst (hereinafter referred to as "Example No. 22") by following the same steps as those of the Twenty-first Preferred Embodiment. Note that, in the Twenty-second Preferred Embodiment, $MgSO_4$ was removed from the sulfuric-acid-acidified amorphous sepiolite powder in an amount of 19% by weight.

Twenty-third Preferred Embodiment

(Heat Treatment Step)

As for the double-chained-structure type clay mineral, a palygorskite powder was prepared in a grain size of 100 mesh. The palygorskite was produced in Turkey. The palygorskite powder was processed in the same manner as the Twenty-first Preferred Embodiment to prepare an amorphous palygorskite powder.

(Substitution Step)

The amorphous palygorskite powder was weighed out by 2 kg. 60 L pure water was added to the amorphous palygorskite power. The resulting mixture was stirred by a mixer to prepare a suspension "C". While, a solution "D" was prepared; namely: 10 L pure water was added to 2.9 kg cobalt nitrate ($Co(NO_3)_2$), and the resulting mixture was stirred by a mixer.

The solution "D" was added to the suspension "C". The resulting mixture was stirred by a propeller stirrer for 1 hour, and suction-filtered. Then, the resulting cake was washed with pure water three times. Thereafter, the washed cake was dried at 120 °C for 24 hours. Finally, the dried cake was calcinated at 500 °C for 1 hour. By carrying out these operations, the amorphous palygorskite powder was subjected to ion exchange so that Co substituted for Mg and/or Al therein. A substituted amorphous palygorskite powder was thus prepared. According to a composition analysis, the substituted amorphous palygorskite powder had a Co content of 4.9% by weight.

Hereinafter, the steps described in the Twenty-first Preferred Embodiment were followed to produce an oxidizing catalyst (hereinafter referred to as "Example No. 23). Note that, in the Twenty-third Preferred Embodiment, the sulfates, such as $MgSO_4$, etc., were removed from the sulfuric-acid-acidified amorphous palygorskite powder in a amount of 10% by weight in total.

Comparative Example No. 12

Except that the acidifying step and the removing step were not carried out, Comparative Example No. 12 was carried out in the same manner as the Twenty-first Preferred Embodiment.

For instance, in Comparative Example No. 12, the simply-substituted amorphous sepiolite power prepared in the Twenty-first Preferred Embodiment was utilized to prepare a slurry for coating, instead of the sulfuric-acid-acidified amorphous sepiolite powder prepared in the Twenty-first Preferred Embodiment.

Except these modifications, the steps described in the Twenty-first Preferred Embodiment were followed to produce an oxidizing catalyst (hereinafter referred to as "Comparative Example No. 12"). Note that, in Comparative Example No. 12, no $MgSO_4$ was removed.

Comparative Example No. 13

Except that the acidifying step and the removing step were not carried out, Comparative Example No. 13 was carried out in the same manner as the Twenty-third Preferred Embodiment.

For instance, in Comparative Example No. 13, the simply-substituted amorphous palygorskite power prepared in the Twenty-third Preferred Embodiment was utilized to prepare a slurry for coating, instead of the sulfuric-acid-acidified amorphous palygorskite powder prepared in the Twenty-third Preferred Embodiment.

Except these modifications, the steps described in the Twenty-third Preferred Embodiment were followed to produce an oxidizing catalyst (hereinafter referred to as "Comparative Example No. 13"). Note that, in Comparative Example No. 13, no sulfates, such as $MgSO_4$, etc., were removed.

Examination and Evaluation

A vortex-flow-chamber type diesel engine was prepared, and was provided with an opening exhaust gas purifying apparatus. Note that the diesel engine had a displacement of 2.4 L. Example Nos. 21 through 23, and Comparative Example Nos. 12 through 13 were installed in the opening exhaust gas purifying apparatus, respectively, and were examined for their purifying performance initially as well as after a durability test Note that, in the examination, the diesel engine was operated under the 10-mode and 15-mode alternately for a predetermined period of time.

Specifically, the durability test was carried out under the following conditions; namely: Example Nos. 21 through 23, and Comparative Example Nos. 12 through 13 were exposed to exhaust gases emitted from the diesel engine at 500 °C for 50 hours. Note that the sulfur (S) content of the supplied diesel fuel was 0.05% by weight.

Example Nos. 21 through 23, and Comparative Example Nos. 12 through 13 were examined for their purifying performance in the following manner; namely: a Chassis Dynamometer provided with a dilution tunnel is used to measure a weight of "PM" which were trapped by a filter. A "PM" conversion (%) was calculated by the following equation:

$$\text{"PM" Conversion (\%)} = [\{(\text{Inlet Gas "PM" Content (g/km)}) - (\text{Outlet Gas "PM" Content (g/km)})\}/(\text{Inlet gas "PM" Content (g/km)})] \times 100$$

Table 5 below summarizes the results of this examination.

TABLE 5

| | "PM" Conversion (%) | | Specific Surface Area ($m^2$/g) | |
|---|---|---|---|---|
| | Initial | After Durability Test | Initial | After Durability Test |
| Ex. No. 21 | 31 | 26 | 190 | 110 |
| Ex. No. 22 | 30 | 20 | 170 | 130 |
| Ex. No. 23 | 31 | 27 | 190 | 140 |
| Comp. Ex. No. 12 | 33 | 14 | 190 | 23 |
| Comp. Ex. No. 13 | 36 | 15 | 200 | 58 |

13

The following characteristics are apparent from Table 5; namely: when the "PM" conversions of Example Nos. 21 through 23 are compared with those of Comparative Example Nos. 12 and 13, they were substantially identical with each other initially. After the durability test, however, the "PM" conversions of Example Nos. 21 through 23 were higher than those of Comparative Example Nos. 12 and 13.

In order to investigate the drawback of Comparative Example Nos. 12 and 13, the catalyst loading layers of Comparative Example Nos. 12 and 13 were scraped off after the durability test, and were subjected to an X-ray diffraction analysis. As a result, the catalyst loading layers of Comparative Example Nos. 12 and 13 were found to exhibit a diffraction peak which resulted from $MgSO_4$. Moreover, it is appreciated from Table 3 that Comparative Example Nos. 12 and 13 deteriorated in terms of the BET specific surface area after the durability test. For example, after the durability test, their BET specific surface areas deteriorated to about 1/9 to 1/3 of their initial BET specific surface areas. According to these facts, it is believed that the salts, such as $MgSO_4$, etc., accumulated to close the channels of the clay minerals in Comparative Example Nos. 12 and 13 during the durability test, and to degrade the BET specific surface areas of Comparative Example Nos. 12 and 13.

On the other hand, Example Nos. 21 and 23 were acidified at 500 °C by using $SO_2$ gas in the acidifying step. Example No. 22 was acidified by using $(NH_4)_2SO_4$) and calcinated thereafter in the acidifying step. Accordingly, the salts, such as $MgSO_4$, etc., were formed forcibly in Example Nos. 21 through 23, and were removed therefrom by the subsequent washing operation. As a result, Example Nos. 21 through 23 could maintain their high BET specific surface areas even after the durability test. Moreover, it is believed that Example Nos. 21 through 23 were less likely to degrade in terms of the BET specific surface area even after the durability test, because the acidifying step and the removing step can remove the detrimental elements, such as Mg and/or Al, which adversely affect the BET specific surface area.

Thus, even after the durability test, Example Nos. 21 through 23 were inhibited from exhibiting a degraded BET specific surface area, and their "PM" conversions were little deteriorated from their initial values virtually. Hence, it is understood that Example Nos. 21 through 23 could purify the "PM" at high conversions for a prolonged period of service.

Having now fully described the present invention, it will be apparent to one of ordinary skill in the art that may changes and modifications can be made thereto without departing from the spirit or scope of the present invention as set forth herein including the appended claims.

## Claims

1.  A process for producing an oxidizing catalyst comprises the steps of:

    thermally treating a double-chained-structure type clay mineral including as a constituent at least one element selected from the group consisting of magnesium and aluminum in a temperature range of from 400 to 800 °C to modify the double-chained-structure type clay mineral to an amorphous clay mineral at least partially having an amorphous structure;
    substituting a transition metal element for the constituent of the amorphous structure in a ratio of from 0.05 to 0.80 with respect to a total number of atoms of the constituent of the amorphous clay mineral for preparing a substituted amorphous clay mineral; and
    loading at least one element selected from the group consisting of platinum-group elements on the substituted amorphous clay mineral.

2.  The process according to Claim 1, wherein said double-chained-structure type clay mineral is at least one selected from the group consisting of sepiolite $(Si_{12}Mg_8O_{30}(OH)_4 \cdot (OH_2)_4 \cdot 8H_2O)$, palygorskite $((Mg, Al)_5Si_8O_{20}(OH)_2 \cdot (OH_2)_4 \cdot 4H_2O)$, and attapulgite $((Mg, Al)_5Si_8O_{20}(OH)_2 \cdot (OH_2)_4 \cdot 4H_2O)$.

3.  The process according to Claim 1, wherein said modifying step is heating the double-chained-structure type clay mineral in a temperature range of from 600 to 700 °C.

4.  The process according to Claim 1, wherein said substituting step is carried out by an ion-exchange process.

5.  The process according to Claim 4, wherein said substituting step is conducted by dispersing the amorphous clay mineral into 10 times by weight or more of water on the basis of a weight of the amorphous clay mineral.

6.  The process according to Claim 4, wherein the ion-exchange process is carried out by using the transition metal element in form of a salt.

7. The process according to Claim 1, further comprising a step of adsorbing a transition metal element on a surface of the amorphous clay mineral and forming an amorphous transition metal oxide on a surface of the substituted amorphous clay mineral, the step being carried out between said substituting step and said loading step.

8. The process according to Claim 1, wherein said transition metal element is at least one selected from the group consisting of Fe, Co, Ni, Mn, and Cu.

9. The process according to Claim 1, wherein said transition metal element is Fe.

10. An oxidizing catalyst, comprising:

an amorphous clay mineral having at least one part of amorphous structure in a double-chained-structure type clay mineral including a a constituent at least one element selected from the group consisting of magnesium and aluminum; and
a platinum-group element loaded on the amorphous clay mineral,
said constituent of said at least one part of amorphous structure being at least partially replaced with a transition metal element in a ratio of from 0.05 to 0.80 with respect to a total number of atoms of the constituent of the amorphous clay mineral.

11. The oxidizing catalyst according to Claim 10, wherein the double-chained-structure type clay mineral is at least one member selected from the group consisting of sepiolite ($Si_{12}Mg_8O_{30}(OH)_4 \cdot (OH_2)_4 \cdot 8H_2O$), palygorskite (($Mg$, $Al)_5Si_8O_{20}(O\text{-}H)_2 \cdot (OH_2)_4 \cdot 4H_2O$), and attapulgite (($Mg$, $Al)_5Si_8O_{20}(OH)_2 \cdot (OH_2)_4 \cdot 4H_2O$).

12. The oxidizing catalyst according to Claim 10, wherein the transition metal element is at least one element selected from the group consisting of Fe, Co, Ni, Mn, and Cu.

13. The oxidizing catalyst according to Claim 10, wherein the transition metal element is Fe.

14. The oxidizing catalyst according to Claim 10, further comprising a amorphous transition metal oxide disposed on a surface of the amorphous clay mineral.

15. A process for producing an oxidizing catalyst, comprising the steps of:

thermally treating a double-chained-structure type clay mineral including as a constituent at least one element selected from the group consisting of magnesium and aluminum in a temperature range of from 400 to 800 °C to modify the double-chained-structure type clay mineral to an amorphous clay mineral at least partially having a amorphous structure;
substituting a transition metal element at least partially for the constituent of the amorphous structure for preparing a substituted amorphous clay mineral; and
acidifying the substituted amorphous clay mineral to turn at least a part of a remaining constituent from substitution into a salt for preparing an acidified clay mineral;
removing the salt from the acidified clay mineral for preparing a salt-removed clay mineral; and
loading at least one element selected from the group consisting of platinum-group elements on the salt-removed clay mineral.

16. The process according to Claim 15, wherein the constituent of the amorphous structure is replaced from 0.05 to 0.80 by atomic ratio with respect to a total number of atoms of the constituent of the amorphous clay mineral.

17. The process according to Claim 15, wherein said double-chained-structure type clay mineral is at least one selected from the group consisting of sepiolite ($Si_{12}Mg_8O_{30}(OH)_4 \cdot (OH_2)_4 \cdot 8H_2O$), palygorskite (($Mg$, $Al)_5Si_8O_{20}(OH)_2 \cdot (OH_2)_4 \cdot 4H_2O$), and attapulgite (($Mg$, $Al)_5Si_8O_{20}(OH)_2 \cdot (OH_2)_4 \cdot 4H_2O$).

18. The process according to Claim 15, wherein said modifying step is heating the double-chained-structure type clay mineral in a temperature range of from 600 to 700 °C.

19. The process according to Claim 15, wherein said substituting step is carried out by an ion-exchange process.

20. The process according to Claim 19, wherein said substituting step is conducted by dispersing the amorphous clay mineral into 10 times by weight or more of water on the basis of a weight of the amorphous clay mineral.

21. The process according to Claim 19, wherein the ion-exchange process is carried out by using the transition metal element in form of a salt.

22. The process according to Claim 15, wherein said transition metal element is at least one selected from the group consisting of Fe, Co, Ni, Mn, and Cu.

23. The process according to Claim 15, wherein said transition metal element is Fe.

24. The process according to Claim 15, wherein said acidifying step is a sulfonation process with a sulfate solution.

25. The process according to Claim 15, wherein said acidifying step is carried out with a sulfur dioxide ($SO_2$) gas.

26. The process according to Claim 15, wherein said acidifying step is a sulfonation process with a ammonium sulfate (($NH_4)_2SO_4$) solution, and a calcination process thereafter.

EP 0 732 145 A1

European Patent
Office

**EUROPEAN SEARCH REPORT**

Application Number

EP 96 10 4255

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| P,X, D | DATABASE WPI<br>Week 9520<br>Derwent Publications Ltd., London, GB;<br>AN 951515451<br>XP002007007<br>& JP-A-07 075 738 (TOYOTA CHUO KKK) , 20 March 1995<br>* abstract *<br>--- | 1 | B01J21/16<br>B01D53/86<br>B01D53/94 |
| A,D | PATENT ABSTRACTS OF JAPAN<br>vol. 017, no. 232 (C-1056), 12 May 1993<br>& JP-A-04 363138 (TOYOTA CENTRAL RES & DEV LAB INC), 16 December 1992,<br>* abstract *<br>----- | 1 | |
| | | | TECHNICAL FIELDS SEARCHED (Int.Cl.6)<br><br>B01J<br>B01D |

The present search report has been drawn up for all claims

| Place of search | Date of completion of the search | Examiner |
|---|---|---|
| THE HAGUE | 28 June 1996 | Devisme, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document